(19) **Europäisches Patentamt**
**European Patent Office**
**Office européen des brevets**

(11) **EP 2 831 171 B1**

(12) **EUROPEAN PATENT SPECIFICATION**

(45) Date of publication and mention
of the grant of the patent:
**18.05.2016 Bulletin 2016/20**

(21) Application number: **13710657.1**

(22) Date of filing: **25.02.2013**

(51) Int Cl.:
***C08L 53/00*** *(2006.01)*

(86) International application number:
**PCT/US2013/027587**

(87) International publication number:
**WO 2013/148035 (03.10.2013 Gazette 2013/40)**

(54) **POLYOLEFIN ELASTOMER FORMULATIONS**

POLYOLEFIN-ELASTOMER-FORMULIERUNGEN

FORMULATIONS D'ÉLASTOMÈRES POLYOLÉFINIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2012 US 201261617756 P**

(43) Date of publication of application:
**04.02.2015 Bulletin 2015/06**

(73) Proprietor: **Dow Global Technologies LLC**
**Midland, MI 48674 (US)**

(72) Inventors:
• **MUNRO, Jeffrey C.**
**Houston, TX 77021 (US)**
• **LAAKSO, Raymond L. Jr.**
**St. Francisville, LA 70775-9607 (US)**
• **MADENJIAN, Lisa S.**
**Lake Jackson, TX 77566 (US)**

(74) Representative: **V.O.**
**P.O. Box 87930**
**2508 DH Den Haag (NL)**

(56) References cited:
**US-A- 4 735 988    US-A- 4 945 005**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The invention relates to olefin block copolymer formulations comprising polyethylene and polypropylene that provide improved adhesion properties to polypropylene while maintaining desired flexural modulus characteristics and are particularly suited for overmolded goods.

BACKGROUND

Olefin block copolymers (OBCs) are useful for producing soft compounds such as soft-touch articles. OBCs find application in soft compounds such as overmolded grips because the block architecture of the OBC results in good tensile strength, compression set and temperature resistance. However, a need exists for blends of OBCs and polyolefins that provide improved adhesion to substrates such as polypropylene for these overmolded goods applications.

SUMMARY

The invention provides a formulation comprising: a) an olefin block copolymer comprising hard blocks and soft blocks wherein the soft blocks comprise 9-27 mol% comonomer, preferably 15-22 mol%; and wherein the block copolymer has a melt index, $I_2$ at 190 °C of 0.5 to 30 g/10 min, preferably 5-15 g/10 min; and a density of 0.866 - 0.887 g/cm$^3$, preferably 0.866 - 0.877 g/cm$^3$; b) a polyethylene having a melt index, $I_2$ at 190 °C of 0.5-200 g/10 min, preferably 30-150 g/10 min and a density of 0.910-0.965 g/cm$^3$, preferably 0.915-0.935 g/cm$^3$; and, c) a polypropylene having a Melt Flow Rate at 230 °C of 2-80 g/10 min, preferably 30-80 g/10 min; wherein the ratios of block copolymer to polyethylene to polypropylene are 50 - 90/5 - 45/5 - 20, preferably 55 - 75/15 - 35/5 - 15; and, the formulation has a melt index, $I_2$ at 190 °C of 1-70 g/10 min, preferably 10-40 g/10min; a Shore A hardness of 65-95, preferably 70-90; a flexural modulus (2% secant) of 4-14 ksi, preferably 8-12 ksi; an adhesion to polypropylene via the tensile bar weld line test of greater than 3.2 MPa; and, an adhesion to polypropylene via the 90° butt joint test of > 5 kgf. The invention additionally provides articles comprising the formulation, in particular, but not limited to, overmolded goods.

DETAILED DESCRIPTION

The present disclosure provides formulations of olefin block copolymers, polyethylene and polypropylene that provide certain advantageous properties as described herein.

DEFINITIONS

All references to the Periodic Table of the Elements herein shall refer to the Periodic Table of the Elements, published and copyrighted by CRC Press, Inc., 2003. Also, any references to a Group or Groups shall be to the Groups or Groups reflected in this Periodic Table of the Elements using the IUPAC system for numbering groups. Unless stated to the contrary, implicit from the context, or customary in the art, all parts and percents are based on weight. For purposes of United States patent practice, the contents of any patent, patent application, or publication referenced herein are hereby incorporated by reference in their entirety (or the equivalent US version thereof is so incorporated by reference), especially with respect to the disclosure of synthetic techniques, definitions (to the extent not inconsistent with any definitions provided herein) and general knowledge in the art.

Any numerical range recited herein, includes all values from the lower value to the upper value, in increments of one unit, provided that there is a separation of at least 2 units between any lower value and any higher value. As an example, if it is stated that the amount of a component, or a value of a compositional or a physical property, such as, for example, amount of a blend component, softening temperature, melt index, etc., is between 1 and 100, it is intended that all individual values, such as, 1, 2, 3, etc., and all sub-ranges, such as, 1 to 20, 55 to 70, 97 to 100, etc., are expressly enumerated in this specification. For values which are less than one, one unit is considered to be 0.0001, 0.001, 0.01 or 0.1, as appropriate. These are only examples of what is specifically intended, and all possible combinations of numerical values between the lowest value and the highest value enumerated, are to be considered to be expressly stated in this application. In other words, any numerical range recited herein includes any value or sub-range within the stated range. Numerical ranges have been recited, as discussed herein, reference melt index, melt flow rate, and other properties.

The terms "blend", "formulation" or "polymer blend," as used herein, is a blend of two or more polymers. Such a blend may or may not be miscible (not phase separated at molecular level). Such a blend may or may not be phase separated. Such a blend may or may not contain one or more domain configurations, as determined from transmission electron spectroscopy, light scattering, x-ray scattering, and other methods known in the art.

The term "composition," as used herein, includes a mixture of materials which comprise the composition, as well as reaction products and decomposition products formed from the materials of the composition.

The term "comprising," and derivatives thereof, is not intended to exclude the presence of any additional component, step or procedure, whether or not the same is disclosed herein. In order to avoid any doubt, all compositions claimed herein through use of the term "comprising" may include any additional additive, adjuvant, or compound whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed. The term "or", unless stated otherwise, refers to the listed members individually as well as in any combination.

The term "polymer" is a macromolecular compound prepared by polymerizing monomers of the same or different type. "Polymer" includes homopolymers, copolymers, terpolymers, interpolymers, and so on. The term "interpolymer" means a polymer prepared by the polymerization of at least two types of monomers or comonomers. It includes, but is not limited to, copolymers (which usually refers to polymers prepared from two different types of monomers or comonomers, terpolymers (which usually refers to polymers prepared from three different types of monomers or comonomers), tetrapolymers (which usually refers to polymers prepared from four different types of monomers or comonomers), and the like.

**Olefin Block Copolymer**

The term "olefin block copolymer" or "OBC" is an ethylene/α-olefin multi-block copolymer and includes ethylene and one or more copolymerizable α-olefin comonomer in polymerized form, characterized by multiple blocks or segments of two or more polymerized monomer units differing in chemical or physical properties. The terms "interpolymer" and "copolymer" are used interchangeably herein. In some embodiments, the multi-block copolymer can be represented by the following formula:

$$(AB)_n$$

where n is at least 1, preferably an integer greater than 1, such as 2, 3, 4, 5, 10, 15, 20, 30, 40, 50, 60, 70, 80, 90, 100, or higher, "A" represents a hard block or segment and "B" represents a soft block or segment. Preferably, As and Bs are linked in a substantially linear fashion, as opposed to a substantially branched or substantially star-shaped fashion. In other embodiments, A blocks and B blocks are randomly distributed along the polymer chain. In other words, the block copolymers usually do not have a structure as follows.

AAA-AA-BBB-BB

In still other embodiments, the block copolymers do not usually have a third type of block, which comprises different comonomer(s). In yet other embodiments, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

Preferably, ethylene comprises the majority mole fraction of the whole block copolymer, i.e., ethylene comprises at least 50 mole percent of the whole polymer. More preferably ethylene comprises at least 60 mole percent, at least 70 mole percent, or at least 80 mole percent, with the substantial remainder of the whole polymer comprising at least one other comonomer that is preferably an α-olefin having 3 or more carbon atoms. For many ethylene/octene block copolymers, the preferred composition comprises an ethylene content greater than 80 mole percent of the whole polymer and an octene content of from 10 to 15, preferably from 15 to 20 mole percent of the whole polymer.

The olefin block copolymer includes various amounts of "hard" and "soft" segments. "Hard" segments are blocks of polymerized units in which ethylene is present in an amount greater than 95 weight percent, or greater than 98 weight percent based on the weight of the polymer. In other words, the comonomer content (content of monomers other than ethylene) in the hard segments is less than 5 weight percent, or less than 2 weight percent based on the weight of the polymer. In some embodiments, the hard segments include all, or substantially all, units derived from ethylene. "Soft" segments are blocks of polymerized units in which the comonomer content (content of monomers other than ethylene) is greater than 5 weight percent, or greater than 8 weight percent, greater than 10 weight percent, or greater than 15 weight percent based on the weight of the polymer. In some embodiments, the comonomer content in the soft segments can be greater than 20 weight percent, greater than 25 weight percent, greater than 30 weight percent, greater than 35 weight percent, greater than 40 weight percent, greater than 45 weight percent, greater than 50 weight percent, or greater than 60 weight percent.

The soft segments can be present in an OBC from 1 weight percent to 99 weight percent of the total weight of the OBC, or from 5 weight percent to 95 weight percent, from 10 weight percent to 90 weight percent, from 15 weight percent to 85 weight percent, from 20 weight percent to 80 weight percent, from 25 weight percent to 75 weight percent, from 30 weight percent to 70 weight percent, from 35 weight percent to 65 weight percent, from 40 weight percent to 60 weight percent, or from 45 weight percent to 55 weight percent of the total weight of the OBC. Conversely, the hard segments can be present in similar ranges. The soft segment weight percentage and the hard segment weight percentage can be calculated based on data obtained from DSC or NMR. Such methods and calculations are disclosed in, for example, U.S. Patent No. 7,608,668, entitled "Ethylene/α-Olefin Block Inter-polymers," filed on March 15, 2006, in the name of Colin L. P. Shan, Lonnie Hazlitt, et. al. and assigned to Dow Global Technologies Inc., the disclosure of which is incorporated by reference herein in its entirety. In particular, hard and soft segment weight percentages and comonomer content may be determined as described in Column 57 to Column 63 of US 7,608,668. The olefin block copolymer is a polymer comprising two or more chemically distinct regions or segments (referred to as "blocks") preferably joined in a linear manner, that is, a polymer comprising chemically differentiated units which are joined end-to-end with respect to polymerized ethylenic functionality, rather than in pendent or grafted fashion. In an embodiment, the blocks differ in the amount or type of incorporated comonomer, density, amount of crystallinity, crystallite size attributable to a polymer of such composition, type or degree of tacticity (isotactic or syndiotactic), region-regularity or regio-irregularity, amount of branching (including long chain branching or hyper-branching), homogeneity or any other chemical or physical property. Compared to block interpolymers of the prior art, including interpolymers produced by sequential monomer addition, fluxional catalysts, or anionic polymerization techniques, the present OBC is characterized by unique distributions of both polymer polydispersity (PDI or Mw/Mn or MWD), block length distribution, and/or block number distribution, due, in an embodiment, to the effect of the shuttling agent(s) in combination with multiple catalysts used in their preparation.

In an embodiment, the OBC is produced in a continuous process and possesses a polydispersity index, PDI, from 1.7 to 3.5, or from 1.8 to 3, or from 1.8 to 2.5, or from 1.8 to 2.2. When produced in a batch or semi-batch process, the OBC possesses PDI from 1.0 to 3.5, or from 1.3 to 3, or from 1.4 to 2.5, or from 1.4 to 2.

In addition, the olefin block copolymer possesses a PDI fitting a Schultz-Flory distribution rather than a Poisson distribution. The present OBC has both a polydisperse block distribution as well as a polydisperse distribution of block sizes. This results in the formation of polymer products having improved and distinguishable physical properties. The theoretical benefits of a polydisperse block distribution have been previously modeled and discussed in Potemkin, Physical Review E (1998) 57 (6), pp. 6902-6912, and Dobrynin, J. Chem.Phys. (1997) 107 (21), pp 9234-9238.

In an embodiment, the present olefin block copolymer possesses a most probable distribution of block lengths. In an embodiment, the olefin block copolymer is defined as having:

(A) Mw/Mn from 1.7 to 3.5, at least one melting point, Tm, in degrees Celsius, and a density, d, in grams/cubic centimeter, where in the numerical values of Tm and d correspond to the relationship:

$$\mathrm{Tm} > -2002.9 + 4538.5(\mathrm{d}) - 2422.2(\mathrm{d})^2,$$

and/or

(B) Mw/Mn from 1.7 to 3.5, and is characterized by a heat of fusion, ΔH in J/g, and a delta quantity, ΔT, in degrees Celsius defined as the temperature difference between the tallest DSC peak and the tallest Crystallization Analysis Fractionation ("CRYSTAF") peak, wherein the numerical values of ΔPT and ΔH have the following relationships:

$$\Delta \mathrm{T} > -0.1299\, \Delta \mathrm{H} + 62.81 \text{ for } \Delta \mathrm{H} \text{ greater than zero and up to } 130 \text{ J/g}$$

$$\Delta \mathrm{T} \geq 48°\mathrm{C} \text{ for } \Delta \mathrm{H} \text{ greater than } 130 \text{ J/g}$$

wherein the CRYSTAF peak is determined using at least 5 percent of the cumulative polymer, and if less than 5 percent of the polymer has an identifiable CRYSTAF peak, then the CRYSTAF temperature is 30°C; and/or
(C) elastic recovery, Re, in percent at 300 percent strain and 1 cycle measured with a compression-molded film of the ethylene/α-olefin interpolymer, and has a density, d, in grams/cubic centimeter, wherein the numerical values of Re and d satisfy the following relationship when ethylene/α-olefin interpolymer is substantially free of crosslinked phase:

$$Re > 1481 - 1629(d);$$

and/or

(D) has a molecular fraction which elutes between 40°C and 130°C when fractionated using TREF, characterized in that the fraction has a molar comonomer content greater than, or equal to, the quantity (- 0.2013) T + 20.07, more preferably greater than or equal to the quantity (-0.2013) T+ 21.07, where T is the numerical value of the peak elution temperature of the TREF fraction, measured in °C; and/or,

(E) has a storage modulus at 25°C, G'(25°C), and a storage modulus at 100°C, G'(100°C), wherein the ratio of G'(25°C) to G'(100°C) is in the range of 1:1 to 9:1. The olefin block copolymer may also have:

(F) a molecular fraction which elutes between 40°C and 130°C when fractionated using TREF, characterized in that the fraction has a block index of at least 0.5 and up to 1 and a molecular weight distribution, Mw/Mn, greater than 1.3; and/or

(G) average block index greater than zero and up to 1.0 and a molecular weight distribution, Mw/Mn greater than 1.3. It is understood that the olefin block copolymer may have one, some, all, or any combination of properties (A)-(G). Block Index can be determined as described in detail in US Patent No. 7,608,668 herein incorporated by reference for that purpose. Analytical methods for determining properties (A) through (G) are disclosed in, for example, US Patent No 7,608,668, Col. 31, line 26 through Col. 35, line 44, which is herein incorporated by reference for that purpose.

Suitable monomers for use in preparing the present OBC include ethylene and one or more addition polymerizable monomers other than ethylene. Examples of suitable comonomers include straight-chain or branched $\alpha$-olefins of 3 to 30, preferably 3 to 20, carbon atoms, such as propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene and 1-eicosene; cyclo-olefins of 3 to 30, preferably 3 to 20, carbon atoms, such as cyclopentene, cycloheptene, norbornene, 5-methyl-2-norbornene, tetracyclododecene, and 2-methyl-1,4,5,8-dimethano-1,2,3,4,4a,5,8,8a-octahydronaphthalene; di-and polyolefins, such as butadiene, isoprene, 4-methyl-1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene, ethylidenenorbornene, vinyl norbornene, dicyclopentadiene, 7-methyl-1,6-octadiene, 4-ethylidene-8-methyl-1,7-nonadiene, and 5,9-dimethyl-1,4,8-decatriene; and 3-phenylpropene, 4-phenylpropene, 1,2-difluoroethylene, tetrafluoroethylene, and 3,3,3-trifluoro-1-propene.

The olefin block copolymer has a density of from 0.850 g/cc to 0.887 g/cc, or from 0.860 g/cc to 0.88 g/cc or from 0.866 g/cc to 0.879 g/cc. In an embodiment, the olefin block copolymer has a melt index (MI) of 0.1 g/10 min to 30 g/10, or of 1 g/10 min to 20 g/10 min, or of 1 g/10 min to 15 g/10 min, as measured by ASTM D 1238 (190°C/2.16 kg). The composition may comprise more than olefin block copolymer.

The olefin block copolymers are produced via a chain shuttling process such as described in US Patent No. 7,858,706, which is herein incorporated by reference. In particular, suitable chain shuttling agents and related information are listed in Col. 16, line 39 through Col. 19, line 44. Suitable catalysts are described in Col. 19, line 45 through Col. 46, line 19 and suitable co-catalysts in Col. 46, line 20 through Col. 51 line 28. The process is described throughout the document, but particularly in Col. Col 51, line 29 through Col. 54, line 56. The process is also described, for example, in the following: US Patent Nos. 7,608,668; US 7,893,166; and US 7,947,793.

**Polyethylene**

The polyethylene is selected from ultra-low density polyethylene (ULDPE), low density polyethylene (LDPE), linear low density polyethylene (LLDPE), medium density polyethylene (MDPE), high density polyethylene (HDPE), high melt strength high density polyethylene (HMS-HDPE), ultra-high density polyethylene (UHDPE), and combinations thereof.

**Polypropylene**

The polypropylene is selected from random copolymer polypropylene (rcPP), impact copolymer polypropylene (hPP + at least one elastomeric impact modifier) (ICPP) or high impact polypropylene (HIPP), high melt strength polypropylene (HMS-PP), isotactic polypropylene (iPP), syndiotactic polypropylene (sPP), and combinations thereof.

**Optional components**

A homogeneously branched ethylene/alpha-olefin copolymer can also be added to the formulation. These copolymers can be made with a single-site catalyst including but not limited to a metallocene catalyst or constrained geometry catalyst, and typically have a melting point of less than 105, preferably less than 90, more preferably less than 85, even more preferably less than 80 and still more preferably less than 75°C. The melting point is measured by differential scanning calorimetry (DSC) as described, for example, in USP 5,783,638. The $\alpha$-olefin is preferably a $C_{3-20}$ linear, branched or cyclic $\alpha$-olefin. Examples of $C_{3-20}$ $\alpha$-olefins include propene, 1-butene, 4-methyl-1-pentene, 1-hexene, 1-octene, 1-decene, 1-dodecene, 1-tetradecene, 1-hexadecene, and 1-octadecene. The $\alpha$-olefins can also contain a cyclic structure such as cyclohexane or cyclopentane, resulting in an $\alpha$-olefin such as 3-cyclohexyl-1-propene (allyl cyclohexane) and vinyl cyclohexane. Although not $\alpha$-olefins in the classical sense of the term, for purposes of this invention certain cyclic olefins, such as norbornene and related olefins, are $\alpha$-olefins and can be used in place of some or all of the $\alpha$-olefins described above. Similarly, styrene and its related olefins (for example, $\alpha$-methylstyrene, etc.) are $\alpha$-olefins for purposes of this invention. Illustrative homogeneously branched ethylene/alpha-olefin copolymers include ethylene/propylene, ethylene/butene, ethylene/1-hexene, ethylene/1-octene, ethylene/styrene, and the like. Illustrative terpolymers include ethylene/propylene/1-octene, ethylene/propylene/butene, ethylene/butene/1-octene, and ethylene/butene/styrene. The copolymers can be random or blocky.

More specific examples of homogeneously branched ethylene/alpha-olefin interpolymers useful in this invention include homogeneously branched, linear ethylene/$\alpha$-olefin copolymers (e.g. TAFMER® by Mitsui Petrochemicals Company Limited and EXACT@ by Exxon Chemical Company), and the homogeneously branched, substantially linear ethylene/$\alpha$-olefin polymers (e.g., AFFINITY™ plastomers and ENGAGE™ elastomers available from The Dow Chemical Company). The substantially linear ethylene copolymers are especially preferred, and are more fully described in USP 5,272,236, 5,278,272 and 5,986,028. Blends of any of these interpolymers can also be used in the practice of this invention. In the context of this invention, homogeneously branched ethylene/alpha-olefin interpolymers are not olefin block copolymers.

A propylene-alpha-olefin interpolymer characterized as having substantially isotactic propylene sequences may also be included in the formulation. The propylene-alpha-olefin interpolymers include propylene-based elastomers (PBE). "Substantially isotactic propylene sequences" means that the sequences have an isotactic triad (mm) measured by $^{13}$C NMR of greater than 0.85; in the alternative, greater than 0.90; in another alternative, greater than 0.92; and in another alternative, greater than 0.93. Isotactic triads are well-known in the art and are described in, for example, USP 5,504,172 and International Publication No. WO 00/01745, which refers to the isotactic sequence in terms of a triad unit in the copolymer molecular chain determined by $^{13}$C NMR spectra. Propylene-alpha-olefin interpolymers have melting temperatures <120°C and, typically, have narrow molecular weight distribution.

Such propylene/alpha-olefin interpolymers are further described in the USP 6,960,635 and 6,525,157. Also, propylene/alpha-olefin interpolymers with some degree of long chain branching are described in US Patent Publication 2010-0285253. Such propylene/alpha-olefin interpolymers are commercially available from The Dow Chemical Company, under the trade name VERSIFY, or from ExxonMobil Chemical Company, under the trade name VISTAMAXX.

A random propylene polymer typically comprising 90 or more mole percent units derived from propylene may also be added to the inventive formulation. The remainder of the units in the propylene copolymer is derived from units of at least one $\alpha$-olefin. In the context of this invention, random polypropylene copolymers are not propylene/alpha-olefin interpolymers.

The $\alpha$-olefin component of the propylene copolymer is preferably ethylene (considered an $\alpha$-olefin for purposes of this invention) or a $C_{4-20}$ linear, branched or cyclic $\alpha$-olefin. Examples of $C_{4-20}$ $\alpha$-olefins include 1-butene, 4-methyl-1-pentene, 1-hexene, 1-octene, 1-decene, 1-dodecene, 1-tetradecene, 1-hexadecene, and 1-octadecene. The $\alpha$-olefins also can contain a cyclic structure such as cyclohexane or cyclopentane, resulting in an $\alpha$-olefin such as 3-cyclohexyl-1-propene (allyl cyclohexane) and vinyl cyclohexane. Although not $\alpha$-olefins in the classical sense of the term, for purposes of this invention certain cyclic olefins, such as norbornene and related olefins, particularly 5-ethylidene-2-norbomene, are $\alpha$-olefins and can be used in place of some or all of the $\alpha$-olefins described above. Similarly, styrene and its related olefins (for example, $\alpha$-methylstyrene, etc.) are $\alpha$-olefins for purposes of this invention. Illustrative random propylene copolymers include but are not limited to propylene/ethylene, propylene/1-butene, propylene/1-hexene, propylene/1-octene, and the like. Illustrative terpolymers include ethylene/propylene/1-octene, ethylene/propylene/1-butene, and ethylene/propylene/diene monomer (EPDM).

In further embodiments, the compositions disclosed herein optionally can comprise a wax that may reduce the melt viscosity in addition to reducing costs. Any wax known to a person of ordinary skill in the art can be used in the adhesion composition disclosed herein. Non-limiting examples of suitable waxes include petroleum waxes, polyolefin waxes such as low molecular weight polyethylene or polypropylene, synthetic waxes, paraffin and microcrystalline waxes having melting points from about 55 to about 110°C, Fischer-Tropsch waxes and combinations thereof. In some embodiments, the wax is a low molecular weight polyethylene homopolymer or interpolymer having a number average molecular weight of about 400 to about 6,000 g/mole.

In further embodiments, the compositions disclosed herein optionally can comprise an antioxidant or a stabilizer. Any antioxidant known to a person of ordinary skill in the art may be used in the adhesion composition disclosed herein. Non-limiting examples of suitable antioxidants include amine-based antioxidants such as alkyl diphenylamines, phenyl-$\alpha$- naphthylamine, alkyl or aralkyl substituted phenyl-$\alpha$-naphthylamine, alkylated p-phenylene diamines, tetramethyl-diaminodiphenylamine and the like; and hindered phenol compounds such as 2,6-di-t-butyl-4-methylphenol; 1,3,5-trimethyl-2,4,6-tris(3',5'-di-t-butyl-4'-hydroxybenzyl)benzene; tetrakis[(methylene(3,5-di-t-butyl-4-hydroxyhydrocinnamate)]methane (*e.g.*, IRGANOX™ 1010, from Ciba Geigy, New York); octadecyl-3,5-di-t-butyl-4-hydroxycinnamate (*e.g.*, IRGANOX™ 1076, commercially available from Ciba Geigy) and combinations thereof. Where used, the amount of the antioxidant in the composition can be from about greater than 0 to about 1 wt %, from about 0.05 to about 0.75 wt %, or from about 0.1 to about 0.5 wt % of the total weight of the composition. In further embodiments, the compositions disclosed herein optionally can comprise an UV stabilizer that may prevent or reduce the degradation of the compositions by UV radiation. Any UV stabilizer known to a person of ordinary skill in the art may be used in the adhesion composition disclosed herein. Non-limiting examples of suitable UV stabilizers include benzophenones, benzotriazoles, aryl esters, oxanilides, acrylic esters, Formamidine carbon black, hindered amines, nickel quenchers, hindered amines, phenolic antioxidants, metallic salts, zinc compounds and combinations thereof. Where used, the amount of the UV stabilizer in the composition can be from about greater than 0 to about 1 wt %, from about 0.05 to about 0.75 wt %, or from about 0.1 to about 0.5 wt % of the total weight of the composition.

In further embodiments, the compositions disclosed herein optionally can comprise a colorant or pigment. Any colorant or pigment known to a person of ordinary skill in the art may be used in the adhesion composition disclosed herein. Non-limiting examples of suitable colorants or pigments include inorganic pigments such as titanium dioxide and carbon black, phthalocyanine pigments, and other organic pigments such as IRGAZIN®, CROMOPHTAL®, MONASTRAL®, CINQUASIA®, IRGALITE®, ORASOL®, all of which are available from Ciba Specialty Chemicals, Tarrytown, NY. Where used, the amount of the colorant or pigment in the composition can be from about greater than 0 to about 10 wt %, from about 0.1 to about 5 wt %, or from about 0.5 to about 2 wt % of the total weight of the composition.

The formulation may also include an ethylene-propylene-diene monomer rubber (EPDM). EPDM materials are linear interpolymers of ethylene, propylene, and a nonconjugated diene such as 1,4-hexadiene, dicyclopentadiene, or ethylidene norbornene. A preferred class of interpolymers having the properties disclosed herein is obtained from polymerization of ethylene, propylene, and a non-conjugated diene to make an EPDM elastomer. Suitable non-conjugated diene monomers can be a straight chain, branched chain or cyclic hydrocarbon diene having from 6 to 15 carbon atoms. Examples of suitable non-conjugated dienes include, but are not limited to, straight chain acyclic dienes, such as 1,4-hexadiene, 1,6-octadiene, 1,7-octadiene, 1,9-decadiene, branched chain acyclic dienes, such as 5-methyl-1,4-hexadiene; 3,7-dimethyl-1,6-octadiene; 3,7-dimethyl-1,7-octadiene and mixed isomers of dihydromyricene and dihydroocinene, single ring alicyclic dienes, such as 1,3-cyclopentadiene; 1,4-cyclohexadiene; 1,5-cyclooctadiene and 1,5-cyclododecadiene, and multi-ring alicyclic fused and bridged ring dienes, such as tetrahydroindene, methyl tetrahydroindene, dicyclopentadiene, bicyclo-(2,2,1)-hepta-2,5-diene; alkenyl, alkylidene, cycloalkenyl and cycloalkylidene norbornenes, such as 5-methylene-2-norbornene (MNB); 5-propenyl-2-norbornene, 5-isopropylidene-2-norbornene, 5-(4-cyclopentenyl)-2-norbornene, 5-cyclohexylidene-2-norbomene, 5-vinyl-2-norbornene, and norbornadiene. Of the dienes typically used to prepare EPDMs, the particularly preferred dienes are 1,4-hexadiene (HD), 5-ethylidene-2-norbornene (ENB), 5-vinylidene-2-norbornene (VNB), 5-methylene-2-norbornene (MNB), and dicyclopentadiene (DCPD). The especially preferred dienes are 5-ethylidene-2-norbornene (ENB) and 1,4-hexadiene (HD). The formulation may also comprise a styrenic block copolymer. Generally speaking, styrenic block copolymers include at least two monoalkenyl arene blocks, preferably two polystyrene blocks, separated by a block of a saturated conjugated diene, preferably a saturated polybutadiene block. The preferred styrenic block copolymers have a linear structure, although branched or radial polymers or functionalized block copolymers make useful compounds. The total number average molecular weight of the styrenic block copolymer is preferably from 30,000 to about 250,000 if the copolymer has a linear structure. Such block copolymers may have an average polystyrene content from 10% by weight to 40% by weight. Methods for the preparation of such block copolymers are known in the art. See, e.g., U.S. Patent No. 5,418,290. Suitable catalysts for the preparation of useful block copolymers with unsaturated rubber monomer units include lithium based catalysts and especially lithium-alkyls. U.S. Patent No. 3,595,942 describes suitable methods for hydrogenation of block copolymers with unsaturated rubber monomer units to from block copolymers with saturated rubber monomer units. The structure of the polymers is determined by their methods of polymerization. For example, linear polymers result by sequential introduction of the desired rubber monomer into the reaction vessel when using such initiators as lithium-alkyls or dilithiostilbene and the like, or by coupling a two segment block copolymer with a difunctional coupling agent. Branched structures, on the other hand, may be obtained by the use of suitable coupling agents having a functionality with respect to the block copolymers with unsaturated rubber monomer units of three or more. Coupling may be effected with multifunctional coupling agents such as dihaloalkanes or alkenes and divinyl benzene as well as with certain polar compounds such as silicon halides, siloxanes or esters of monohydric alcohols with carboxylic acids. The presence of any coupling residues in the polymer may be ignored for an adequate description of the block copolymers. Suitable block copolymers having unsaturated rubber monomer units include, but are not limited to, styrene-butadiene (SB), styrene-ethylene/butadiene (SEB), styrene-isoprene(SI), styrene-butadiene-styrene (SBS), styreneisoprene-styrene (SIS), $\alpha$-methylstyrene-butadiene- $\alpha$-methyl-styrene and $\alpha$-methylstyrene-isoprene-$\alpha$-methylstyrene. Suitable block copolymers include, but are not limited to, those commercially available, such as, KRATON™ supplied by KRATON Polymers LLC in Houston, Texas. and VECTOR™ supplied by Dexco Polymers, a TSRC Company in Houston, Texas.

The inventive formulation can optionally include a filler. Non-limiting examples of suitable fillers include talc, calcium carbonate, chalk, calcium sulfate, clay, kaolin, silica, glass, fumed silica, mica, wollastonite, feldspar, aluminum silicate, calcium silicate, alumina, hydrated alumina such as alumina trihydrate, glass microsphere, ceramic microsphere, thermoplastic microsphere, barite, wood flour, glass fibers, carbon fibers, marble dust, cement dust, magnesium oxide, magnesium hydroxide, antimony oxide, zinc oxide, barium sulfate, titanium dioxide, and titanates. The inventive formulation can be made into an article or be made into a component of an article. Nonlimiting examples of suitable articles include durable articles for the automotive, construction, medical, food and beverage, electrical, appliance, business machine, and consumer applications. In some embodiments, the compositions are used to manufacture flexible durable parts or articles selected from toys, grips, soft touch handles, bumper rub strips, floorings, auto floor mats, wheels, casters, furniture and appliance feet, tags, seals, gaskets such as static and dynamic gaskets, automotive doors, bumper fascia, grill components, rocker panels, hoses, linings, office supplies, seals, liners, diaphragms, tubes, lids, stoppers, plunger tips, delivery systems, kitchen wares, shoes, shoe bladders and shoe soles. In some embodiments, the compositions are used to manufacture durable parts or articles that require a high tensile strength and low compression set. In further embodiments, the compositions are used to manufacture durable parts or articles that require a high upper service temperature and a low modulus. Particularly preferred articles are lids for polyolefin containers, especially those used for food storage wherein the inventive formulation is overmolded onto a polypropylene substrate that comprises the lid.

The inventive formulations provide improved adhesion to a substrate, in particular a polypropylene substrate, while also exhibiting an advantageous flexural modulus. The substrate can be any polyolefin, but is preferably a polypropylene. The polypropylene substrate may be random copolymer polypropylene (rcPP), impact copolymer polypropylene (hPP + at least one elastomeric impact modifier) (ICPP) or high impact polypropylene (HIPP), high melt strength polypropylene (HMS-PP), isotactic polypropylene (iPP), syndiotactic polypropylene (sPP), and combinations thereof. Preferably, the substrate is random copolymer polypropylene.

Preferred properties of the components and the formulations and values for those properties are given in Table 1.

Table 1: Components and Property Ranges

| Component | Property | Preferred Range | Most Preferred |
|---|---|---|---|
| OBC | MI (I$_2$, 2.16 kg @ 190 °C) (g/10min) | 0.5 - 30 | 5-15 |
| | Density (g/cm$^3$) | 0.866-0.887 | 0.866-0.877 |
| | Soft segment mol% comonomer, preferably octene | 9-27 | 15-22 |
| | Concentration (wt%) | 50-90 | 55-75 |
| PE | MI (I$_2$, 2.16 kg @ 190 °C) (g/10min) | 0.5-200 | 30-150 |
| | Density (g/cm$^3$) | 0.910-0.965 | 0.915-0.935 |
| | Concentration (wt%) | 5-45 | 15-35 |
| PP | MFR (I$_2$, 2.16 kg @ 230 °C) (g/10min) | 2-80 | 30-80 |
| | Concentration (wt%) | 5-20 | 5-15 |
| Final Composition | Ratios OBC/PE/PP | 50 - 90/5 - 45/5 - 20 | 55 - 75/15 - 35/5 - 15 |
| | Final MI (I$_2$, 2.16 kg @ 190 C) (g/10min) | 1 - 70 | 10 - 40 |
| | Shore A Hardness (min - max) | 65-95 | 70-90 |
| | Flex Modulus, 2% secant, ksi (min - max) | 4 - 14 | 8-12 |
| | Adhesion (min) - tensile bar weld line (MPa) | > 3.2 | > 3.2 |
| | Adhesion (min) - 90° butt joint (kgf) | > 5 | > 5 |
| Substrate for adhesion | polypropylene | hPP, rcPP, or icPP | rcPP |

TEST METHODS

Density is measured in accordance with ASTM D 792.

For $^{13}$C NMR analysis, the samples are prepared by adding approximately 3g of a 50/50 mixture of tetrachloroethane-$d_2$/orthodichlorobenzene to 0.4 g sample in a 10 mm NMR tube. The samples are dissolved and homogenized by heating the tube and its contents to 150°C. The data are collected using a JEOL Eclipse™ 400MHz spectrometer or a Varian Unity Plus™ 400MHz spectrometer, corresponding to a $^{13}$C resonance frequency of 100.5 MHz. The data are acquired using 4000 transients per data file with a 6 second pulse repetition delay. To achieve minimum signal-to-noise for quantitative analysis, multiple data files are added together. The spectral width is 25,000 Hz with a minimum file size of 32K data points. The samples are analyzed at 130 °C in a 10 nun broad band probe. The comonomer incorporation is determined using Randall's triad method (Randall, J.C.; JMS-Rev. Macromol. Chem. Phys., C29, 201-317 (1989), which is incorporated by reference herein in its entirety.

Differential scanning calorimetry (DSC) is performed on compression molded specimens using a TA Instruments Q100 or Q1000 DSC and a crimp-sealed Perkin Elmer pan. Samples are equilibrated at -90°C for 5 min., then heated at 10°C/min. to 180°C (capturing the "1$^{st}$ Heat DSC Curve"), held for 5 min., then cooled at 10°C/min. to -90°C (capturing the "crystallization curve"), held for 5 minutes, then heated at 10°C/min. to 180°C (capturing the "2$^{nd}$ Heat DSC Curve"). The data is analyzed using TA Universal Analysis software after run completion.

Melt Index (MI) is measured in accordance with ASTM D 1238, Condition 190 °C/2.16 kg. Melt flow rate (MFR) is tested in accordance with ASTM D 1238, Condition 230 °C/2.16 kg (formerly Condition L).

Shore A hardness is measured on molded plaques in accordance with ASTM D 2240. This test method permits hardness measurements based on either initial indentation or indentation after a specified period of time, or both. In this case, a specified time of 10 seconds is used.

Flexural modulus, 2% secant, is measured using ASTM D790.

By way of example and not by limitation, examples of the present disclosure will now be provided.

EXAMPLES

Table 2 - Components

| Component | Description |
|---|---|
| OBC1 | INFUSE™ 9507 olefin block copolymer, $I_2$ of 5 g/10 min, density of 0.866 g/cm$^3$ (The Dow Chemical Company) |
| OBC2 | INFUSE™ 9817 olefin block copolymer, $I_2$ of 15 g/10 min, density of 0.877 g/cm$^3$ (The Dow Chemical Company) |
| OBC3 | INFUSE™ 9500 olefin block copolymer, $I_2$ of 5 g/10 min, density of 0.877 g/cm$^3$ (The Dow Chemical Company) |
| OBC4 | INFUSE™ 9107 olefin block copolymer, $I_2$ of 1 g/10 min, density of 0.866 g/cm$^3$ (The Dow Chemical Company) |
| PE | DNDB-7147 LLDPE, MFR 50 g/10 min, density 0.926 g/cm$^3$ (The Dow Chemical Company) |
| PP | PP R7021-50RNA, MFR 50 g/10 min (available from Braskem America) |
| SEBS | Styrene-ethylene-butylene-styrene copolymer (available from sources such as Kraton Polymers LLC) |
| PP Substrate | PP D380.00 Developmental Performance Polymer (The Dow Chemical Company) |

Comparative and Inventive formulations are shown in Tables 3 and 4. Formulations A-G are comparative and Formulations 1-3 are inventive. Formulations A-C and F-G and Formulations 1-3 were prepared by mixing pellets at press, followed by injection molding. Formulation D was a precompounded resin that was injection molded and is an SBC compound that has the desired hardness and flexural modulus for overmolded applications.

Table 3 - Formulations and Properties - Set 1 - amounts are wt% based on weight of formulation

| | Formulation A | Formulation B | Formulation C | Formulation 1 | Formulation D |
|---|---|---|---|---|---|
| **Components (wt%)** | | | | | |
| OBC1 | 60 | -- | 75 | 60 | -- |
| OBC2 | -- | 60 | -- | -- | -- |
| PE | 40 | 40 | -- | 30 | -- |
| PP | -- | -- | 25 | 10 | -- |
| SEBS | -- | -- | -- | -- | 100 |
| **Properties** | | | | | |
| Hardness (Shore A) | 79 | 88 | 82 | 81 | 85 |
| Flex Modulus, 2% secant (ksi) | 8.1 | 11.5 | 14.1 | 11.4 | 10.0 |
| Adhesion Strength (MPa) (Tensile bar butt joint) | 3.1 | 0.6 | 4.4 | 3.8 | 3.3 |

As shown in Table 3, only Formulation 1 and Formulation C have adhesion strength to PP that is comparable to that for the SEBS compound on PP. However, Formulation C has a significantly higher flexural modulus than desired in an application such as a container lid. Such a high flexural modulus can prevent good sealing of the lid to the container. Similar hardness and flexural modulus to the SEBS compound can be achieved with blends of OBC with LLDPE. However, the adhesion strength for these 2-component blends is not as good as for the inventive 3-component blend.

Table 4: Formulations and Properties - Set 2

| | Formulation 2 | Formulation 3 | Formulation E | Formulation F | Formulation G |
|---|---|---|---|---|---|
| **Components (wt%)** | | | | | |
| OBC3 | 65 | -- | 60 | 40 | 60 |
| OBC4 | -- | 65 | -- | -- | -- |
| PE | 20 | 20 | 15 | 50 | 40 |
| PP | 15 | 15 | 25 | 10 | -- |
| **Properties** | | | | | |
| Hardness (Shore A) | 83 | 80 | 88 | 91 | 88 |
| Flex Modulus, 2% secant (ksi) | 11.3 | 10.1 | 22.8 | 17.2 | 10.4 |
| Adhesion Strength (MPa) (Tensile bar butt joint) | 4.9 | 4.1 | 6.0 | 6.0 | 3.0 |
| Adhesion strength (kgf) (Plaque butt joint) | 8.5 | 11.2 | 6.6 | 4.5 | 3.9 |

In the above examples in Table 4, two additional inventive examples are shown that have a different ratio of components compared to the inventive example given in Table 3. Formulation E illustrates that the compound becomes too stiff (high flexural modulus) when the amount of PP is too high. Formulation F illustrates that if the amount of OBC used is too low, the resulting compound is too stiff and lacks sufficient adhesion in one of the adhesion tests. Formulation G is similar to Formulation A from Table 3 and illustrates that a 2-component blend of OBC and a PE meets the hardness and flexibility requirements, but does not have good adhesion to PP in either of the two adhesion methods tested.

Methods:

Sample Blend Preparation:

All of the examples were prepared by combining the components in a large plastic bag and tumble blending prior to introduction into the hopper of the injection molder. Blend properties (hardness and flexural modulus):

The blends were injection molded on a Krauss Maffei KM 110-390/390 CL Multi-Inject injection molding machine equipped with an Axxicon mold base. Plaques 4x6x0.125" were injection molded using the following conditions:

| Barrel and Mold Temperatures | |
| --- | --- |
| Hopper zone (°C) | 30 |
| Zone 1 Temperature (°C) | 121 |
| Zone 2 Temperature (°C) | 175 |
| Zone 3 Temperature (°C) | 204 |
| Zone 4 Temperature (°C) | 204 |
| Zone 5 Temperature (°C) | 204 |
| Nozzle Temperature (°C) | 200 |
| Mold Temperature (°F) | 100 |
| **Extruder** | |
| RPM (1/min) | 100 |
| Backpressure (Bar) | 50 |
| Dosage (ccm) | 75 |
| Suckback (ccm) | 5 |
| | |
| **Injection** | |
| Injection Speed (ccm/s) | 40 |
| Injection pressure (bar) | 2000 |
| Switch Over Position (ccm) | 15 |
| | |
| **Hold** | |
| Hold Pressure (Bar) | 300 |
| Hold Time (s.) | 23 |
| | |
| **Time** | |
| Cool Time (s.) | 20 |

These injection molded plaques were used for determination of the mechanical properties of the blends. The hardness (Shore A, 10 s delay) and flexural modulus were measured according to ASTM D2240 and ASTM D790, respectively.

Adhesion Strength (MPa) (Tensile bar butt joint)

Samples for the adhesion test were prepared on a Krauss Maffei KM 110-390/390 CL Multi-Inject injection molding machine equipped with an Axxicon mold base. First, PP Substrate (D 380.00 Developmental Performance Polymer) tensile bars were injection molded using the following mold inserts and process conditions listed below. The PP Substrate tensile bars were cut in half (crosswise) and the ½ tensile bar pieces were reinserted into the mold insert away from the gate. Then, the Formulation was injection molded using the same mold inserts, but with the following process conditions listed below. The blend component pellets were tumble blended prior to loading into the hopper of the injection molding machine. The Formulation was overmolded onto the PP Substrate insert within 24 hrs of molding the Substrate PP tensile bars using the conditions below:

| Mold insert A side: Aim Mirror insert | | |
|---|---|---|
| Mold Insert B side: ASTM D 638 Type I Tensile | | |
| **Barrel and Mold Temperatures** | **Substate PP** | **Formulation** |
| Hopper zone (°C) | 30 | 30 |
| Zone 1 Temperature (°C) | 121 | 121 |
| Zone 2 Temperature (°C) | 175 | 175 |
| Zone 3 Temperature (°C) | 204 | 204 |
| Zone 4 Temperature (°C) | 204 | 204 |
| Zone 5 Temperature (°C) | 204 | 204 |
| Nozzle Temperature (°C) | 200 | 200 |
| Mold Temperature (°F) | 100 | 100 |
| **Extruder** | | |
| RPM (1/min) | 100 | 100 |
| Backpressure (Bar) | 30 | 50 |
| Dosage (ccm) | 40 | 40 |
| Suckback (ccm) | 5 | 5 |
| **Optimal Injection** | | |
| Injection Speed (ccm/s) | 40 | 40 |
| Injection pressure (bar) | 2000 | 2000 |
| Switch Over Position (ccm) | 18 | 18 |
| **Hold** | | |
| Hold Pressure (Bar) | 400 | 400 |
| Hold Time (s.) | 23 | 23 |
| **Time** | | |
| Cool Time (s.) | 20 | 20 |

The tensile bar specimens were allowed to sit at ambient conditions for at least 7 days prior to testing. The tensile bars were tested on an Instron™ 5564 equipped with a 1000 N load cell. The tensile bars were held with pneumatic grips and tested at a crosshead speed of 2 in/min. The adhesion strength was recorded as the stress at failure of the joint between the Formulation and Substrate PP. At least three specimens were tested for each sample.

Adhesion strength (kgf) (Plaque butt joint)

Samples for this adhesion test were prepared on a Krauss Maffei KM 110-390/390 CL Multi-Inject injection molding machine equipped with an Axxicon mold base. First, Substrate PP (D 380.00 Developmental Performance Polymer) plaques (4x6x0.125") were injection molded using the following mold inserts and process conditions listed below. The Substrate PP plaque was cut lengthwise to leave a 1x6" strip that was reinserted into the bottom of the mold insert. Then, the Formulation was injection molded using the same mold inserts, but with the following process conditions listed below. This resulted in a 4x6x0.125" plaque with a 3x6x0.125" Formulation section overmolded onto a 1x6x0.125" PP strip, where there is a 6x0.125" butt joint between the Formulation and Substrate PP. The blend component pellets were tumble blended prior to loading into the hopper of the injection molding machine. The Formulation was overmolded onto the PP insert within 24 hrs of molding the Substrate PP plaque under conditions shown below:

| Mold insert A side: Aim Mirror insert | | |
|---|---|---|
| Mold Insert B side: 4x6x0.125" plaque insert | | |
| **Barel and Mald Temperatures** | **Substrate PP** | **Formulation** |
| Hopper zone (°C) | 30 | 30 |
| Zone 1 Temperature (°C) | 121 | 121 |
| Zone 2 Temperature (°C) | 175 | 175 |
| Zone 3 Temperature (°C) | 204 | 204 |
| Zone 4 Temperature (°C) | 204 | 204 |
| Zone 5 Temperature (°C) | 204 | 204 |
| Nozzle Temperature (°C) | 200 | 200 |
| Mold Temperature (°F) | 100 | 100 |
| **Extruder** | | |
| RPM (1/min) | 100 | 100 |
| Backpressure (Bar) | 30 | 50 |
| Dosage (ccm) | 75 | 60 |
| Suckback (ccm) | 5 | 5 |
| **Optimal Injection** | | |
| Injection Speed (ccm/s) | 40 | 40 |
| Injection pressure (bar) | 2000 | 2000 |
| Switch Over Position (ccm) | 18 | 15 |
| **Hold** | | |
| Hold Pressure (Bar) | 300 | 300 |
| Hold Time (s.) | 23 | 23 |
| **Time** | | |
| Cool Time (s.) | 20 | 20 |

The overmolded plaque specimens were allowed to sit at ambient conditions for at least 7 days prior to testing. The 4x6x0.125" Formulation/ Substrate PP plaque was cut lengthwise to create a 2x6x0.125" plaque with a 1" wide Substrate PP strip and 1" wide Formulation strip. A slit 1" in length was made between the Formulation and Substrate PP at the gate end of the plaque. The plaques were tested on an Instron™ 5564 equipped with a 1000 N load cell. The plaque was placed flat on a stage with the Substrate PP section clamped to the stage. The 1x1" Formulation tab that was created by making the slit described above was placed into a pneumatic grip, forming a 90° configuration. The specimen was then tested at a crosshead speed of 5 in/min. The force required to peel the Formulation from the Substrate PP along the overmolded joint point was recorded. The peel force for the center 2" of the overmolded joint were averaged and reported as the adhesion strength in the tables above. At least three specimens were tested for each sample.

It is specifically intended that the present disclosure not be limited to the embodiments and illustrations contained herein, but include modified forms of those embodiments including portions of the embodiments and combinations of elements of different embodiments as come within the scope of the following claims.

**Claims**

1. A formulation comprising:

    a) an olefin block copolymer comprising hard blocks and soft blocks wherein:

the soft blocks comprise 9-27 mol% comonomer; and wherein the block copolymer has a melt index, $I_2$ at 190 °C of 0.5 to 30 g/10 min, and a density of 0.866 - 0.887 g/cm$^3$;

b) a polyethylene having a melt index, $I_2$ at 190 °C of 0.5-200 g/10 min, and a density of 0.910-0.965 g/cm$^3$; and,

c) a polypropylene having a Melt Flow Rate at 230 °C of 2-80 g/10 min; wherein:

the ratios of block copolymer to polyethylene to polypropylene are 50 - 90/5 - 45/5 - 20;
the formulation having a melt index, $I_2$ at 190 °C of 1-70 g/10 min;
a Shore A hardness of 65-95;
a flexural modulus (2% secant) of 4-14 ksi;
an adhesion to polypropylene via the tensile bar weld line test of greater than 3.2 MPa; and,
an adhesion to polypropylene via the 90° butt joint test of > 5 kgf.

2. The formulation of claim 1, wherein the soft blocks comprise 15-22 mol% comonomer.

3. The formulation of claim 1 or 2, wherein the melt index of the block copolymer is from 5-15 g/10 min.

4. The formulation of any one of the preceding claims, wherein the melt index of the polyethylene is from 30-150 g/10 min.

5. The formulation of any one of the preceding claims, wherein the density of the block copolymer is from 0.866 - 0.877 g/cm$^3$.

6. The formulation of any one of the preceding claims, wherein the density of the polyethylene is from 0.915-0.935 g/cm$^3$.

7. The formulation of any one of the preceding claims, wherein the Melt Flow Rate of the polypropylene is from 30-80 g/10 min.

8. The formulation of any one of the preceding claims, wherein the ratios of block copolymer to polyethylene to polypropylene is from 55 - 75/15 - 35/5 - 15.

9. The formulation of any one of the preceding claims, wherein the Shore A hardness is from 70-90.

10. The formulation of any one of the preceding claims, wherein the flexural modulus is from 8-12 ksi.

11. A formulation for an overmolded good including the formulation as claimed in claim 1.

12. An article comprising:

a polypropylene substrate; and
an overmolded layer on the polypropylene substrate, the overmolded layer including the formulation as claimed in claim 1.

**Patentansprüche**

1. Eine Formulierung, die Folgendes umfasst:

a) ein Olefinblockcopolymer, das harte Blöcke und weiche Blöcke umfasst, wobei:

die weichen Blöcke 9-27 Mol-% Comonomer umfassen; und wobei das Blockcopolymer einen Schmelzindex $I_2$ bei 190 °C von 0,5 bis 30 g/10 min und eine Dichte von 0,866-0,887 g/cm$^3$ aufweist;

b) ein Polyethylen mit einem Schmelzindex $I_2$ bei 190 °C von 0,5-200 g/10 min und einer Dichte von 0,910-0,965 g/cm$^3$; und

c) ein Polypropylen mit einem Schmelzflussindex bei 230 °C von 2-80 g/10 min; wobei:

die Verhältnisse von Blockcopolymer zu Polyethylen zu Polypropylen 50-90 : 5-45 : 5-20 sind;
die Formulierung Folgendes aufweist: einen Schmelzindex $I_2$ bei 190 °C von 1-70 g/10 min;

eine Shore-A-Härte von 65-95;
einen Biegemodul (2 % Sekante) von 4-14 ksi;
eine Haftung an Polypropylen von mehr als 3,2 MPa mittels des Zugstab-Bindenaht-Tests; und
eine Haftung an Polypropylen von > 5 kgf mittels des 90°-Stoßverbindungstests.

2. Formulierung gemäß Anspruch 1, wobei die weichen Blöcke 15-22 Mol-% Comonomer umfassen.

3. Formulierung gemäß Anspruch 1 oder 2, wobei der Schmelzindex des Blockcopolymers 5-15 g/10 min beträgt.

4. Formulierung gemäß einem der vorhergehenden Ansprüche, wobei der Schmelzindex des Polyethylens 30-150 g/10 min beträgt.

5. Formulierung gemäß einem der vorhergehenden Ansprüche, wobei die Dichte des Blockcopolymers 0,866-0,877 g/cm$^3$ beträgt.

6. Formulierung gemäß einem der vorhergehenden Ansprüche, wobei die Dichte des Polyethylens 0,915-0,935 g/cm$^3$ beträgt.

7. Formulierung gemäß einem der vorhergehenden Ansprüche, wobei der Schmelzflussindex des Polypropylens 30-80 g/10 min beträgt.

8. Formulierung gemäß einem der vorhergehenden Ansprüche, wobei die Verhältnisse von Blockcopolymer zu Polyethylen zu Polypropylen 55-75 : 15-35 : 5-15 betragen.

9. Formulierung gemäß einem der vorhergehenden Ansprüche, wobei die Shore-A-Härte 70-90 beträgt.

10. Formulierung gemäß einem der vorhergehenden Ansprüche, wobei der Biegemodul 8-12 ksi beträgt.

11. Eine Formulierung für eine umspritzte Ware, die die Formulierung gemäß Anspruch 1 umfasst.

12. Ein Artikel, der Folgendes umfasst:

ein Polypropylensubstrat; und
eine umspritzte Schicht auf dem Polypropylensubstrat, wobei die umspritzte Schicht die Formulierung gemäß Anspruch 1 umfasst.

**Revendications**

1. Une formulation comprenant :

a) un copolymère bloc oléfinique comprenant des blocs durs et des blocs souples où :

les blocs souples comprennent de 9 à 27 % en moles de comonomère ; et où le copolymère bloc a un indice de fluidité à l'état fondu, $I_2$ à 190 °C de 0,5 à 30 g/10 min, et une masse volumique de 0,866 à 0,887 g/cm$^3$ ;

b) un polyéthylène ayant un indice de fluidité à l'état fondu, $I_2$ à 190 °C de 0,5 à 200 g/10 min, et une masse volumique de 0,910 à 0,965 g/cm$^3$ ; et,

c) un polypropylène ayant un indice de fluidité à chaud à 230 °C de 2 à 80 g/10 min ; dans laquelle :

les rapports du copolymère bloc au polyéthylène au polypropylène sont 50 - 90/5 - 45/5 - 20 ;
la formulation ayant un indice de fluidité à l'état fondu, $I_2$ à 190 °C de 1 à 70 g/10 min ;
une dureté Shore A de 65 à 95 ;
un module de flexion (sécant à 2 %) de 4 à 14 ksi ;
une adhérence au polypropylène via l'essai sur ligne de soudure de barreau de traction de plus de 3,2 MPa ; et,
une adhérence au polypropylène via l'essai sur joint droit à 90° de > 5 kgf.

**2.** La formulation de la revendication 1, dans laquelle les blocs souples comprennent de 15 à 22 % en moles de comonomère.

**3.** La formulation de la revendication 1 ou de la revendication 2, dans laquelle l'indice de fluidité à l'état fondu du copolymère bloc est de 5 à 15 g/10 min.

**4.** La formulation de l'une quelconque des revendications précédentes, dans laquelle l'indice de fluidité à l'état fondu du polyéthylène est de 30 à 150 g/10 min.

**5.** La formulation de l'une quelconque des revendications précédentes, dans laquelle la masse volumique du copolymère bloc est de 0,866 à 0,877 g/cm$^3$.

**6.** La formulation de l'une quelconque des revendications précédentes, dans laquelle la masse volumique du polyéthylène est de 0,915 à 0,935 g/cm$^3$.

**7.** La formulation de l'une quelconque des revendications précédentes, dans laquelle l'indice de fluidité à chaud du polypropylène est de 30 à 80 g/10 min.

**8.** La formulation de l'une quelconque des revendications précédentes, dans laquelle les rapports du copolymère bloc au polyéthylène au polypropylène sont de 55 - 75/15 - 35/5 - 15.

**9.** La formulation de l'une quelconque des revendications précédentes, dans laquelle la dureté Shore A est de 70 à 90.

**10.** La formulation de l'une quelconque des revendications précédentes, dans laquelle le module de flexion est de 8 à 12 ksi.

**11.** Une formulation pour un produit surmoulé incluant la formulation telle que revendiquée dans la revendication 1.

**12.** Un article comprenant :

un substrat en polypropylène ; et
une couche surmoulée sur le substrat en polypropylène, la couche surmoulée incluant la formulation telle que revendiquée dans la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7608668 B
- US 7858706 B
- US 7893166 B
- US 7947793 B
- US 5783638 A
- US 5272236 A
- US 5278272 A
- US 5986028 A
- US 5504172 A
- WO 0001745 A
- US 6960635 B
- US 6525157 B
- US 20100285253 A
- US 5418290 A
- US 3595942 A

### Non-patent literature cited in the description

- the Periodic Table of the Elements. CRC Press, Inc, 2003
- **POTEMKIN.** *Physical Review E,* 1998, vol. 57 (6), 6902-6912
- **DOBRYNIN.** *J. Chem.Phys.,* 1997, vol. 107 (21), 9234-9238
- **RANDALL, J.C.** *JMS-Rev. Macromol. Chem. Phys.,* 1989, vol. C29, 201-317